# EUROPEAN PATENT APPLICATION

(11) **EP 3 483 850 A1**
(43) Date of publication of application: **15.05.2019**
(21) Application number: 18205140.9
(22) Date of filing: 08.11.2018
(51) Int. Cl.: G07G 1/00, H04W 52/02, G06F 1/3203

(54) **REGISTRATION APPARATUS, REGISTRATION SYSTEM AND REGISTRATION METHOD**

(30) Priority: 09.11.2017 JP 2017216654
(71) Applicant: Toshiba Tec Kabushiki Kaisha, Shinagawa-ku Tokyo 141-8562 (JP)
(72) Inventor: Miyagi, Daisuke, Tokyo 141-8562 (JP)
(74) Representative: Hoffmann Eitle

(57) **Abstract**

In accordance with an embodiment, a registration apparatus comprises an information acquisition section configured to acquire commodity information of a commodity; a residual quantity acquisition section configured to acquire remaining battery level; and a communication section configured to transmit the commodity information input by the information acquisition section to a server if the remaining battery level is equal to or less than a first threshold value.

## Description

### CROSS-REFERENCE TO RELATED APPLICATION

This application is based upon and claims the benefit of priority from Japanese Patent Application No. 2017-216654, filed on November 9, 2017, the entire contents of which are incorporated herein by reference.

### FIELD

Embodiments described herein relate generally to a registration apparatus, a registration system and a registration method.

### BACKGROUND

A checkout system is capable of registering a commodity that a customer takes from a shelf or the like for purchase as a purchase commodity for the customer at that place. In such a checkout system, the customer registers the purchase commodity using a registration terminal. Then, the customer settles the registered commodity using, for example, a settlement apparatus. However, in such a checkout system, when a battery of the registration terminal has run out, registered contents cannot be confirmed. In such a checkout system, when a battery of the registration terminal has run out, the registered contents may be lost in some cases.

### SUMMARY OF THE INVENTION

One of the objects of the present invention is to improve prior art techniques and overcome at least some of the prior art problems as for instance above illustrated.

According to a first aspect of the present invention, it is provided a registration apparatus, comprising an information acquisition section configured to acquire commodity information of a commodity; a residual quantity acquisition section configured to acquire remaining battery level; and a communication section configured to transmit the commodity information acquired by the information acquisition section to a server when the remaining battery level reaches or is below a first threshold value.

Optionally, in the registration apparatus according to the first aspect of the invention, the information acquisition section stops acquiring the commodity information when the remaining battery level reaches or is below a second threshold value.

Optionally, in the registration apparatus according to the first aspect of the invention, the communication section receives, from the server, the commodity information stored in the server, and the information acquisition section acquires the commodity information received by the communication section to relate to the commodity.

Optionally, in the registration apparatus according to the first aspect of the invention, the the communication section receives, from the server, the commodity information stored in the server, and the information acquisition section acquires the commodity information received by the communication section to relate to the commodity.

Optionally, in the registration apparatus according to the first aspect of the invention, the communication section transmits information indicating that the remaining battery level is low when the remaining battery level reaches or is below a third threshold value.

According to a second aspect of the invention, it is provided a registration system comprising a registration apparatus and a server, wherein the registration apparatus comprises an information acquisition section configured to acquire commodity information of a commodity; a residual quantity acquisition section configured to acquire remaining battery level; and a first communication section configured to transmit the commodity information acquired by the information acquisition section to the server when the remaining battery level reaches or becomes below a first threshold value; and the server comprises a second communication section configured to receive the commodity information transmitted by the first communication section; and a storage section configured to store the commodity information received by the second communication section.

According to a third aspect of the invention, it is provided a registration method performed by a registration apparatus including a communication device, the registration method comprising acquiring commodity information of a commodity; acquiring remaining battery level; and transmitting, with the communication device, the acquired commodity information to a server when the remaining battery level is equal to or less than a first threshold value.

Optionally, the registration method according to the third aspect of the invention further comprises stopping acquiring the commodity information when the remaining battery level becomes equal to or less than a second threshold value.

Optionally, the registration method according to the third aspect of the invention further comprises controlling the communication device to receive the commodity information stored in the server from the server, and acquiring the commodity information received by the communication device.

Optionally, the registration method according to the third aspect of the invention further comprises controlling the communication device to receive the commodity information stored in the server from the server, and acquiring the commodity information received by the communication device.

Optionally, in the registration method according to the third aspect of the invention, transmitting the acquired commodity information further comprises indicating that the remaining battery level is low when the remaining battery level becomes equal to or less than a third threshold value.

Optionally, the registration method according to the third aspect of the invention further comprises notifying a store clerk about the remaining battery level.

Optionally, in the registration method according to the third aspect of the invention, the third threshold value equals to the second threshold value.

Optionally, in the registration method according to the third aspect of the invention, acquiring commodity information further comprises inputting and registering commodity information; deleting commodity information; and transmitting a commodity list having one or more records of a remainder of the registered commodity information to a data server connected with the registration apparatus.

Optionally, the registration method according to the third aspect of the invention further comprises sending a notification of the remaining battery level when the remaining battery level is equal to or less than a first threshold value; and proceeding to further acquire commodity information of other commodity.

Optionally, the registration method according to the third aspect of the invention further comprises checking for a backup commodity list upon receiving a transmission response; and upon a determination that the backup commodity list exists, overwriting a current commodity list with the backup commodity list.

Optionally, the registration method according to the third aspect of the invention further comprises displaying a registration screen.

### DESCRIPTION OF THE DRAWINGS

Fig. 1 is a block diagram illustrating an example of circuit configurations of main portions of a checkout system and components of the checkout system according to an embodiment;
Fig. 2 is a flowchart depicting a processing executed by a processor of a registration terminal shown in Fig. 1 according to the embodiment;
Fig. 3 is a flowchart depicting a processing executed by the processor of the registration terminal shown in Fig. 1 according to the embodiment;
Fig. 4 is a flowchart depicting a processing executed by a processor of a server terminal shown in Fig. 1 according to the embodiment;
Fig. 5 is a flowchart depicting a processing executed by a processor of a POS terminal shown in Fig. 1 according to the embodiment; and
Fig. 6 is a flowchart depicting a processing executed by a processor of a terminal for store clerk shown in Fig. 1 according to the embodiment.

### DETAILED DESCRIPTION

In accordance with an embodiment, a registration apparatus includes an information acquisition section configured to acquire commodity information of a commodity; a residual quantity acquisition section configured to acquire remaining battery level; and a communication section configured to transmit the commodity information acquired by the information acquisition section to a server when the remaining battery level is equal to or less than a first threshold value.

Hereinafter, a checkout system according to an embodiment is described with reference to the accompanying drawings.

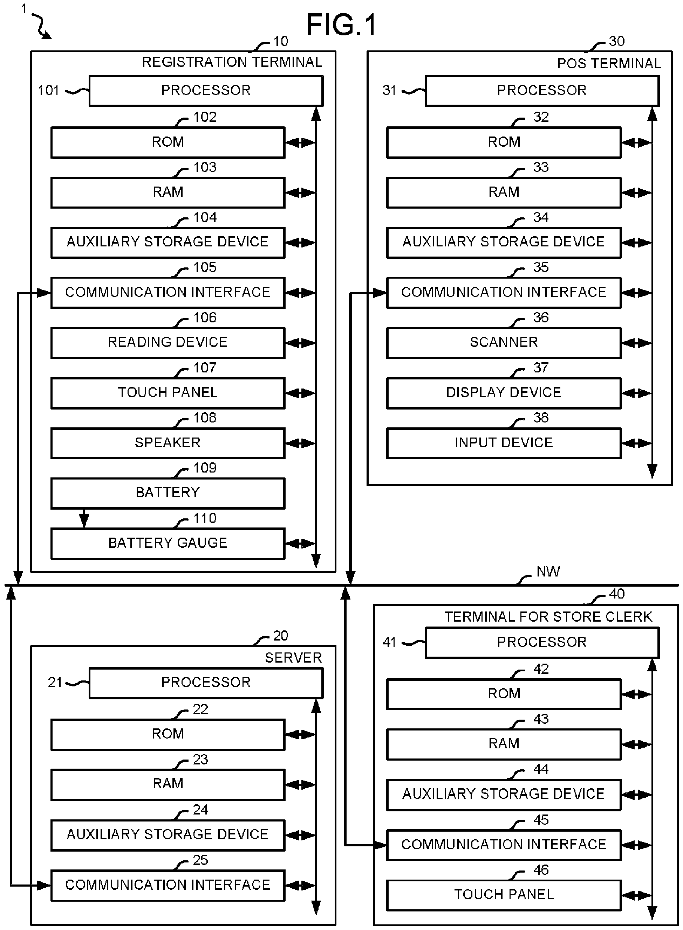

Fig. 1 is a block diagram illustrating an example of circuit configurations of main portions of a checkout system 1 and components of the checkout system 1 according to the embodiment. The checkout system 1 includes a registration terminal 10, a server 20, a POS (Point of Sale) terminal 30 and a terminal for store clerk 40, for example. In Fig. 1, one registration terminal 10, one server 20, one POS terminal 30 and one terminal for store clerk 40 are shown, but the number of each of these devices is not limited. Typically, a plurality of the registration terminals 10, a plurality of the POS terminals 30 and a plurality of the terminals for store clerk 40 are installed.

The registration terminal 10, the server 20, the POS terminal 30 and the terminal for store clerk 40 are connected to a network NW. The network NW is, for example, a communication network such as a LAN (Local Area Network) or the like. The network NW is, for example, the Internet. The network NW may be a wireless line or a wired line, or a combination of a wireless line and a wired line.

The checkout system 1 is an example of a registration system.

The registration terminal 10 is used by a customer when he/she is shopping in a retail store. The registration terminal 10 is used when a customer uses a registration service for registering a commodity that the customer purchases. The registration terminal 10 is, for example, a dedicated terminal for commodity registration. The registration terminal 10 is installed on, for example, a shopping cart or a shopping basket. Alternatively, the registration terminal 10 may be a hand-held type terminal used by a customer in his/her hand. The registration terminal 10 may be a general-purpose terminal such as a smart phone or a tablet PC (personal computer) . For example, the registration terminal 10 includes a processor 101, a ROM (Read-Only Memory) 102, a RAM (Random-Access Memory) 103, an auxiliary storage device 104, a communication interface 105, a reading device 106, a touch panel 107, a speaker 108, a battery 109 and a battery gauge 110. The registration terminal 10 is an example of a registration apparatus.

The processor 101 acts as a central part of a computer which performs processing such as an arithmetic processing or a control processing necessary for the operation of the registration terminal 10. The processor 101 executes programs such as a system software, an application software or a firmware stored in the ROM 102 or the auxiliary storage device 104 to control each section to realize various functions of the registration terminal 10. The processor 101 is, for example, a CPU (Central Processing Unit), a MPU (Micro Processing Unit), a SoC (System on a Chip), a DSP (Digital Signal Processor), a GPU (Graphics Processing Unit), an ASIC (Application Specific Integrated Circuit), a PLD (Programmable Logic Device) or a FPGA (Field-Programmable Gate Array). Alternatively, the processor 101 may be a combination of these.

The ROM 102 acts as a main storage device of the computer with the processor 101 as the central part. The ROM 102 is a read-only nonvolatile memory. The ROM 102 stores the above programs. The ROM 102 stores data used for the processor 101 to perform various processing or various setting values.

The RAM 103 acts as a main storage device of the computer with the processor 101 as the central part. The RAM 103 is a memory used for reading and writing data. The RAM 103 is used as a so-called work area for storing data temporarily used by the processor 101 to perform various processing.

The auxiliary storage device 104 acts as an auxiliary storage device of the computer with the processor 101 as the central part. The auxiliary storage device 104 is, for example, an EEPROM (Electric Erasable Programmable Read-Only Memory), an HDD (Hard Disk Drive), an SSD (Solid State Drive), or the like. The auxiliary storage device 104 may store the above programs. The auxiliary storage device 104 stores data used by the processor 101 to perform various processing, data generated in a processing by the processor 101, or various setting values . The auxiliary storage device 104 or the RAM 103 also stores a first commodity list in which commodities registered as purchase commodities are listed. The auxiliary storage device 104 further stores a commodity database including various information such as a commodity code, a commodity name, and an amount of a commodity being sold in the retail store. The registration terminal 10 may have an interface into which a storage medium such as a memory card or a USB (Universal Serial Bus) memory can be inserted as the auxiliary storage device 104.

The programs stored in the ROM 102 or the auxiliary storage device 104 includes a program for executing later-described processing. As an example, the registration terminal 10 is accessed by an administrator or the like of the registration terminal 10 in a state in which the program is not stored in the ROM 102 or the auxiliary storage device 104. The transferred program separately may be written into the auxiliary storage device 104 under the operation of the administrator. However, the registration terminal 10 may be accessed by an administrator with the program stored in the ROM 102 or the auxiliary storage device 104. The transfer of the program described above may be realized by recording the program on a removable storage medium such as a magnetic disk, a magneto-optical disk, an optical disk, a semiconductor memory or the like, or by downloading the program via the network NW.

The ROM 102 or the auxiliary storage device 104 store a threshold value A and a threshold value B.

The ROM 102 or the auxiliary storage device 104 may store a terminal ID uniquely assigned to each of the registration terminals 10.

The communication interface 105 is an interface through which the registration terminal 10 communicates via the network NW or the like. The communication interface 105 is an example of the communication section.

The reading device 106 is, for example, a barcode reader, an IC (Integrated Circuit) tag reader, a camera, or the like. The registration terminal 10 may include a plurality of types of reading devices 106.

The reading device 106 which is a barcode reader reads information recorded in a barcode attached to a commodity. The barcode may be a two-dimensional barcode.

The reading device 106 which is an IC tag reader reads information recorded in an IC tag such as an RFID (Radio Frequency Identification) tag attached to a commodity.

The reading device 106 which is a camera captures a barcode attached to a commodity. Then, the processor 101 reads information recorded in the barcode from an image of the barcode. Alternatively, the reading device 106 which is the camera may photograph the commodity. Then, the processor 101 specifies the commodity by extracting feature amount of the commodity from an image of the commodity.

The touch panel 107 functions as a display device which displays a screen for providing an operator of the registration terminal 10 with various kinds of information. The touch panel 107 also functions as an input device for receiving a touch operation performed by the operator. The touch panel 107 may display keys for the operator to manually input a commodity code. The touch panel 107 may display a commodity code key associated with a commodity code.

The speaker 108 outputs an input sound signal as a sound wave.

The battery 109 is, for example, a secondary battery that supplies electric power to each section of the registration terminal 10.

The battery gauge 110 measures remaining battery level of the battery 109. The battery gauge 110 outputs a residual quantity indicating the measured remaining battery level of the battery 109.

The server 20 is installed, for example, for each shop or each retail store. The server 20 includes a processor 21, a ROM 22, a RAM 23, an auxiliary storage device 24 and a communication interface 25, for example.

The processor 21 acts as a central part of a computer which performs processing such as an arithmetic processing or a control processing necessary for the operation of the server 20. The processor 21 executes programs such as a system software, an application software or a firmware stored in the ROM 22 or the auxiliary storage device 24 to control each section to realize various functions of the server 20. The processor 21 is, for example, a CPU, a MPU, a SoC, a DSP, a GPU, an ASIC, a PLD or a FPGA. Alternatively, the processor 21 may be a combination of these.

The ROM 22 acts as a main storage device of the computer with the processor 21 as the central part. The ROM 22 is a read-only nonvolatile memory. The ROM 22 stores the above programs. The ROM 22 stores data used for the processor 21 to perform various processing or various setting values.

The RAM 23 acts as a main storage device of the computer with the processor 21 as the central part. The RAM 23 is a memory used for reading and writing data. The RAM 23 is used as a so-called work area for storing data temporarily used by the processor 21 to perform various processing.

The auxiliary storage device 24 acts as an auxiliary storage device of the computer with the processor 21 as the central part. The auxiliary storage device 24 is, for example, an EEPROM, an HDD, an SSD, or the like. The auxiliary storage device 24 may store the above programs. The auxiliary storage device 24 stores data used by the processor 21 to perform various processing, data generated in the processing by the processor 21, or various setting values. The auxiliary storage device 24 stores a commodity database. The auxiliary storage device 24 further stores backup data described below. The auxiliary storage device 24 is an example of a storage section.

The programs stored in the ROM 22 or the auxiliary storage device 24 includes a program for executing a later-described processing. As an example, the server 20 is accessed by an administrator or the like of the server 20 with the program stored in the ROM 22 or the auxiliary storage device 24. However, the server 20 may be accessed by the administrator or the like in a state in which the program is not stored in the ROM 22 or the auxiliary storage device 24. The server 20 may be accessed by the administrator or the like with another program other than the above program stored in the ROM 22 or the auxiliary storage device 24. Then, the program for executing the later-described processing may be separately transferred, and may be written into the ROM 22 or the auxiliary storage device 24 under the operation of the administrator or a service person. The transfer of the program at this time may be realized by recording the program on a removable storage medium such as a magnetic disk, a magneto-optical disk, an optical disk, a semiconductor memory or the like, or by downloading the program via the network NW.

The communication interface 25 is an interface through which the server 20 communicates via the network NW or the like.

The POS terminal 30 is installed in a shop such as a retail store to perform register tasks such as a purchase registration of a commodity to be settled and settlement of the registered commodity. Typically, the POS terminal 30 is a terminal included in a POS system. However, the POS terminal 30 may be an electronic cash register or the like not included in the POS system. The POS terminal 30 is operated by, for example, a store clerk of the retail store. The POS terminal 30 may be a self-checkout type terminal operated by a customer or the like in the retail store. The POS terminal 30 may be a semi-self-service type terminal including a registration apparatus for performing the purchase registration of a commodity and a settlement apparatus for performing settlement of the registered commodity. Typically, in the semi-self- service type POS terminal 30, the registration apparatus is operated by the store clerk, and the settlement apparatus is operated by the customer. A unique POS ID is assigned to each POS terminal 30. A barcode for recording the POS ID is attached to each POS terminal 30. The POS terminal 30 includes, for example, a processor 31, a ROM 32, a RAM 33, an auxiliary storage device 34, a communication interface 35, a scanner 36, a display device 37, and an input device 38.

The processor 31 acts as a central part of a computer which performs processing such as an arithmetic processing or a control processing necessary for the operation of the POS terminal 30. The processor 31 executes programs such as a system software, an application software or a firmware stored in the ROM 32 or the auxiliary storage device 34 to control each section to realize various functions of the POS terminal 30. The processor 31 is, for example, a CPU, a MPU, a SoC, a DSP, a GPU, an ASIC, a PLD, or a FPGA. Alternatively, the processor 31 may be a combination of these.

The ROM 32 acts as a main storage device of the computer with the processor 31 as the central part. The ROM 32 is a read-only nonvolatile memory. The ROM 32 stores the above programs. The ROM 32 stores data used for the processor 31 to perform various processing or various setting values.

The RAM 33 acts as a main storage device of the computer with the processor 31 as the central part. The RAM 33 is a memory used for reading and writing data. The RAM 33 is used as a so-called work area for storing data temporarily used by the processor 31 to perform various processing.

The auxiliary storage device 34 acts as an auxiliary storage device of the computer with the processor 31 as the central part. The auxiliary storage device 34 is, for example, an EEPROM, an HDD, an SSD, or the like. The auxiliary storage device 34 may store the above programs. The auxiliary storage device 34 stores data used by the processor 31 to perform various processing, data generated in the processing by the processor 31, or various setting values. The auxiliary storage device 34 or the RAM 33 stores a second commodity list in which commodities registered as purchase commodities are listed. The auxiliary storage device 34 further stores a commodity database.

The programs stored in the ROM 32 or the auxiliary storage device 34 includes a program for executing a later-described processing. As an example, the POS terminal 30 is accessed by an administrator or the like of the POS terminal 30 with the program stored in the ROM 32 or the auxiliary storage device 34. However, the POS terminal 30 may be accessed by the administrator or the like in a state in which the program is not stored in the ROM 32 or the auxiliary storage device 34. The POS terminal 30 may be accessed by the administrator or the like with another program different from the above program stored in the ROM 32 or the auxiliary storage device 34. Then, the program for executing the later-described processing may be separately transferred, and may be written into the ROM 32 or the auxiliary storage device 34 under the operation of the administrator or a service person. The transfer of the program at this time may be realized by recording the program on a removable storage medium such as a magnetic disk, a magneto-optical disk, an optical disk, a semiconductor memory or the like, or by downloading the program via the network NW.

The communication interface 35 is an interface through which the POS terminal 30 communicates via the network NW or the like.

The scanner 36 reads a barcode displayed on a commodity and outputs a commodity code indicated by the barcode. The scanner 36 may be a hand-held type scanner or a scanner fixed to a cash register or the like. The scanner 36 may be a peripheral device externally attached to the POS terminal 30, or may be integrally formed with the POS terminal 30.

The display device 37 displays a screen for providing an operator of the POS terminal 30 with various kinds of information. The display device 37 is, for example, a display such as a liquid crystal display or an organic EL (Electro-Luminescence) display.

The input device 38 receives an operation by the operator of the POS terminal 30. The input device 38 is, for example, a keyboard, a keypad, a touch pad, a mouse, or the like. A touch panel may be used as the display device 37 and the input device 38. Specifically, a display panel of the touch panel functions as the display device 37, and a touch pad of the touch panel functions as the input device 38.

The terminal for store clerk 40 is typically held by a store clerk. Alternatively, the terminal for store clerk 40 may be installed in a backyard office, register counter or the like for the store clerk to operate. The terminal for store clerk 40 is, for example, a smart phone, a tablet PC, a PC, or a dedicated terminal. The terminal for store clerk 40 includes, for example, a processor 41, a ROM 42, a RAM 43, an auxiliary storage device 44, a communication interface 45, and a touch panel 46.

The processor 41 acts as a central part of a computer which performs processing such as an arithmetic processing or a control processing necessary for the operation of the terminal for store clerk 40. The processor 41 executes programs such as a system software, an application software or a firmware stored in the ROM 42 or the auxiliary storage device 44 to control each section to realize various functions of the terminal for store clerk 40. The processor 41 is, for example, a CPU, a MPU, a SoC, a DSP, a GPU, an ASIC, a PLD, or a FPGA. Alternatively, the processor 41 may be a combination of these.

The ROM 42 acts as a main storage device of the computer with the processor 41 as the central part. The ROM 42 is a read-only nonvolatile memory. The ROM 42 stores the above programs. The ROM 42 stores data used for the processor 41 to perform various processing or various setting values.

The RAM 43 acts as a main storage device of the computer with the processor 41 as the central part. The RAM 43 is a memory used for reading and writing data. The RAM 43 is used as a so-called work area for storing data temporarily used by the processor 41 to perform various processing.

The auxiliary storage device 44 acts as an auxiliary storage device of the computer with the processor 41 as the central part. The auxiliary storage device 44 is, for example, an EEPROM, an HDD, an SSD, or the like. The auxiliary storage device 44 may store the above programs. The auxiliary storage device 44 stores data used by the processor 41 to perform various processing, data generated in the processing by the processor 41, or various setting values.

The programs stored in the ROM 42 or the auxiliary storage device 44 includes a program for executing a later-described processing. As an example, the terminal for store clerk 40 is accessed by an administrator or the like of the terminal for store clerk 40 with the program stored in the ROM 42 or the auxiliary storage device 44. However, the terminal for store clerk 40 may be accessed by the administrator or the like in a state in which the program for executing a later-described processing is not stored in the ROM 42 or the auxiliary storage device 44. The terminal for store clerk 40 may be accessed by the administrator or the like with another program different from the above program stored in the ROM 42 or the auxiliary storage device 44. Then, the program for executing the later-described processing may be separately transferred, and may be written into the ROM 42 or the auxiliary storage device 44 under the operation of the administrator or a service person. The transfer of the program at this time may be realized by recording the program on a removable storage medium such as a magnetic disk, a magneto-optical disk, an optical disk, a semiconductor memory or the like, or by downloading the program via the network NW.

The communication interface 45 is an interface through which the terminal for store clerk 40 communicates via the network NW or the like.

The touch panel 46 functions as a display device which displays a screen for providing the operator of the terminal for store clerk 40 with various kinds of information. The touch panel 46 also functions as an input device for receiving a touch operation by the operator.

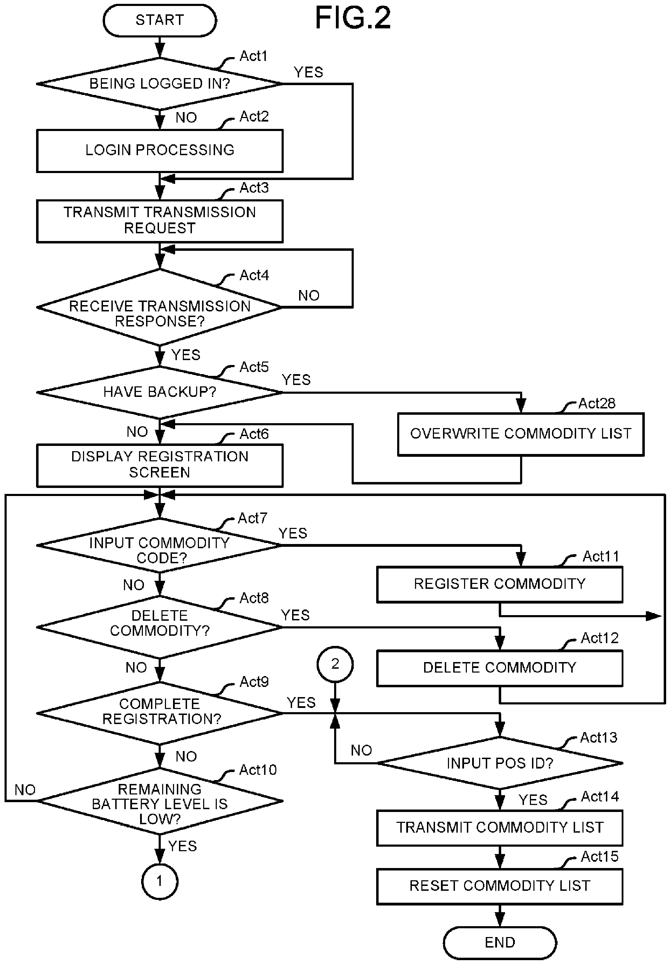

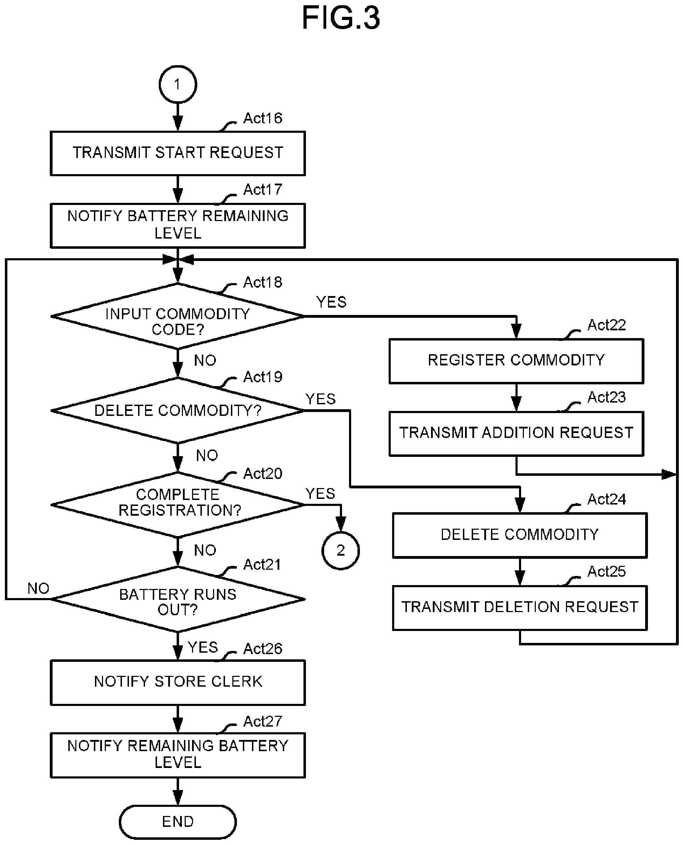

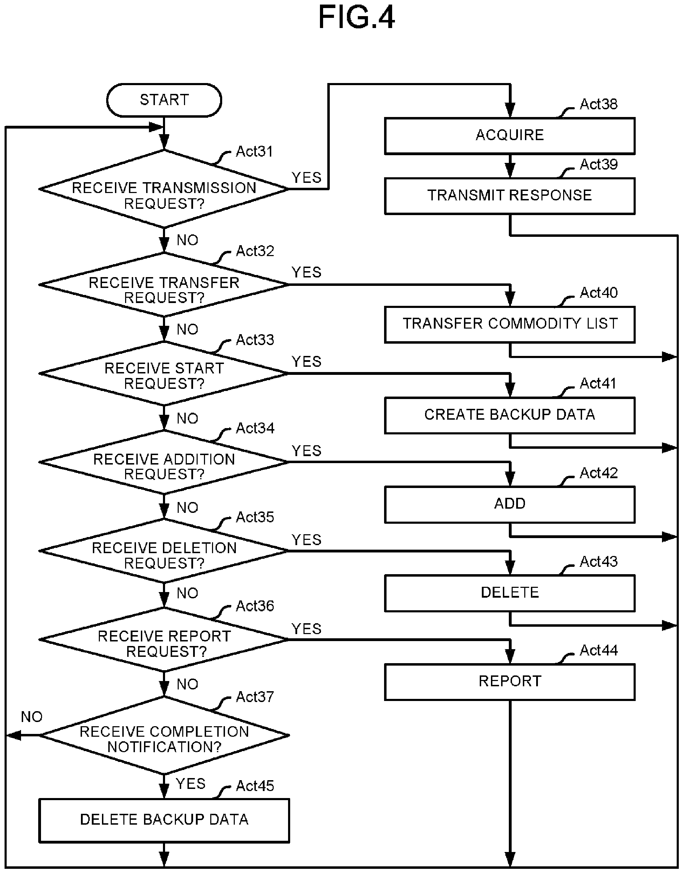

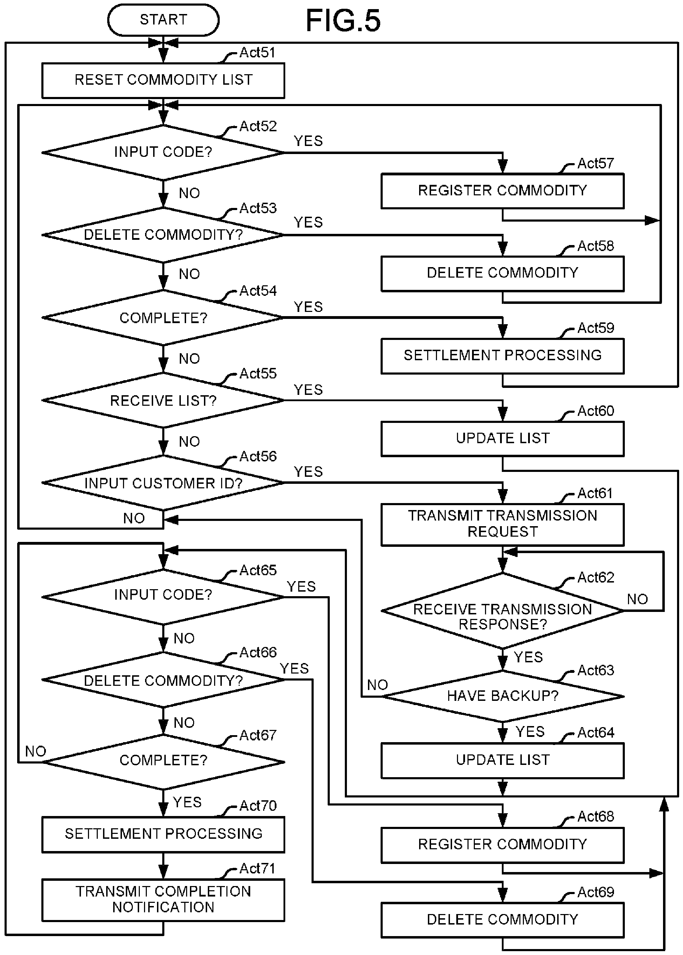

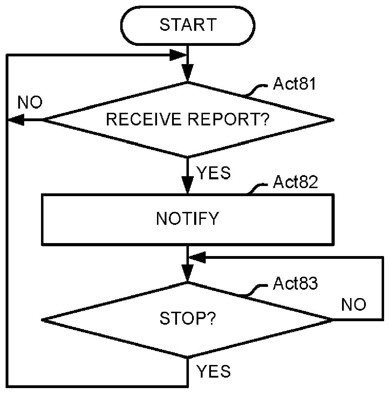

Hereinafter, the operation of the checkout system 1 according to the embodiment is described with reference to Fig. 2 to Fig. 6. The contents of the processing in the following operation description is merely an example, and various processing capable of achieving the same result can be suitably used. Fig. 2 and Fig. 3 are flowcharts depicting processing executed by the processor 101 of the registration terminal 10. The processor 101 executes the processing by executing the program stored in the ROM 102 or the auxiliary storage device 104. Fig. 4 is a flowchart depicting a processing executed by the processor 21 of the server 20. The processor 21 executes the processing by executing the program stored in the ROM 22 or the auxiliary storage device 24. Fig. 5 is a flowchart depicting a processing executed by the processor 31 of the POS terminal 30. The processor 31 executes the processing by executing the program stored in the ROM 32 or the auxiliary storage device 34. Fig. 6 is a flowchart depicting a processing executed by the processor 41 of the terminal for store clerk 40. The processor 41 executes the processing by executing the program stored in the ROM 42 or the auxiliary storage device 44. Unless special description is provided, it is assumed that the processor 101, the processor 21, the processor 31 and the processor 41 proceed to the processing in Act (N+1) after the processing in Act N (N is a natural number).

In Act 1, the processor 101 of the registration terminal 10 determines whether or not the registration terminal 10 logs in to a registration service. If the registration terminal 10 logs in to the registration service, the processor 101 determines Yes in Act 1 and proceeds to the processing in Act 3. Meanwhile, if the registration terminal 10 does not log in to the registration service, the processor 101 determines No in Act 1 and proceeds to the processing in Act 2.

In Act 2, the processor 101 performs a login processing. For example, the customer touches the touch panel 107 to input a customer ID (Identifier) and password to the registration terminal 10. If the correct customer ID and password are input, the registration terminal 10 logs in to the registration service. The customer ID is, for example, a unique ID assigned to each customer. The registration terminal 10 in the state of logging in to the registration service stores the customer ID in the RAM 103 or the auxiliary storage device 104.

In Act 3, the processor 101 generates a transmission request including the customer ID stored in the RAM 103 or the auxiliary storage device 104. The transmission request instructs the server 20 to confirm whether or not backup data associated with the customer ID in the transmission request is stored. Then, if the backup data is stored in the server 20, the transmission request instructs the server 20 to transmit the backup data. After generating the transmission request, the processor 101 controls the communication interface 105 to transmit the transmission request to the server 20. Under the control of the processor 101, the communication interface 105 transmits the transmission request to the server 20. The transmitted transmission request is received by the communication interface 25 of the server 20.

Meanwhile, in Act 31 in Fig. 4, the processor 21 of the server 20 determines whether or not the communication interface 25 receives the transmission request. If the transmission request is not received, the processor 21 determines No in Act 31 and proceeds to the processing in Act 32.

In Act 32, the processor 21 determines whether or not the communication interface 25 receives a transfer request. If the transfer request is not received, the processor 21 determines No in Act 32 and proceeds to the processing in Act 33.

In Act 33, the processor 21 determines whether or not the communication interface 25 receives a start request. If the start request is not received, the processor 21 determines No in Act 33 and proceeds to the processing in Act 34.

In Act 34, the processor 21 determines whether or not the communication interface 25 receives an addition request. If the addition request is not received, the processor 21 determines No in Act 34 and proceeds to the processing in Act 35.

In Act 35, the processor 21 determines whether or not the communication interface 25 receives a deletion request. If the deletion request is not received, the processor 21 determines No in Act 35 and proceeds to the processing in Act 36.

In Act 36, the processor 21 determines whether or not the communication interface 25 receives a report request. If the report request is not received, the processor 21 determines No in Act 36 and proceeds to the processing in Act 37.

In Act 37, the processor 21 determines whether or not the communication interface 25 receives a completion notification. If the completion notification is not received, the processor 21 determines No in Act 37 and returns to the processing in Act 31. Thus, the processor 21 repeats the processing in Act 31 to Act 37 until the transmission request, the transfer request, the start request, the addition request, the deletion request, the report request or the completion notification is received.

If the transmission request is received in the standby state in Act 31 to Act 37, the processor 21 determines Yes in Act 31 and proceeds to the processing in Act 38.

In Act 38, the processor 21 confirms whether or not the backup data associated with the customer ID included in the transmission request is stored in the auxiliary storage device 24. Then, if the backup data associated with the customer ID is stored, the processor 21 acquires the backup data.

In Act 39, the processor 21 generates a transmission response to notify a transmission source of the transmission request whether or not the backup data associated with the customer ID included in the transmission request is stored. If the processor 21 acquires the backup data in Act 38, the processor 21 generates a transmission response including the backup data. After generating the transmission response, the processor 21 controls the communication interface 25 to transmit the transmission response to the transmission source of the transmission request. Under the control of the processor 21, the communication interface 25 transmits the transmission response to the transmission source of the transmission request. The transmitted transmission response is received, for example, by the communication interface 105 of the registration terminal 10. After the processing in Act 39, the processor 21 returns to the processing in Act 31.

Meanwhile, in Act 4 in Fig. 2, the processor 101 of the registration terminal 10 stands by until the transmission response is received by the communication interface 105. If the transmission response is received, the processor 101 determines Yes in Act 4 and proceeds to the processing in Act 5.

In Act 5, the processor 101 determines whether or not the backup data is included in the transmission response received in Act 4. If the backup data is not included in the transmission response received in Act 4, the processor 101 determines No in Act 5 and proceeds to the processing in Act 6.

In Act 6, the processor 101 generates an image corresponding to a registration screen. Then, the processor 101 controls the touch panel 107 to display the generated image. Under the control of the processor 101, the touch panel 107 displays the registration screen. For a commodity already registered in the first commodity list, a commodity name, a commodity code, a price and a quantity of each commodity, a total price, and the like are displayed on the registration screen. On the registration screen, a completion button for instructing the completion of registration is displayed.

In Act 7, the processor 101 determines whether or not the commodity code is input. For example, the commodity code is input to the processor 101 as shown below. The operator of the registration terminal 10 uses the reading device to read a barcode attached to a commodity. As a result, the commodity code recorded in the barcode is input to the processor 101. Alternatively, the operator of the registration terminal 10 may manually input the commodity code by operating keys or the like displayed on the touch panel 107. As a result, the commodity code is input to the processor 101. The operator of the registration terminal 10 may operate a commodity code key displayed on the touch panel 107. In this case, the commodity code associated with the commodity code key is input to the processor 101. The processor 101 may specify the commodity code using image recognition. In this case, the processor 101 includes a camera as the reading device 106. Then, the processor 101 specifies a category of the commodity based on an image captured by the camera. Further, the processor 101 specifies a commodity code associated with the commodity based on the category of the specified commodity. As a result, the commodity code is input to the processor 101. By inputting the commodity code to the processor 101 as described above, the processor 101 acquires the commodity code. Therefore, by inputting the commodity code as described above, the processor 101 functions as an information acquisition section for acquiring the commodity code. The commodity code is an example of commodity information. If the commodity code is not input, the processor 101 determines No in Act 7 and proceeds to the processing in Act 8.

In Act 8, the processor 101 determines whether or not a deletion operation for deleting the commodity registered in the first commodity list is performed. If the deletion operation is not performed, the processor 101 determines No in Act 8 and proceeds to the processing in Act 9.

In Act 9, the processor 101 determines whether or not a completion operation for completing the registration of the commodity is performed. Specifically, the processor 101 determines whether or not a predetermined operation such as touching a subtotal button displayed on the touch panel 107 is performed. As an operation rule, the completion operation is performed after at least one commodity is registered. The operation of the processor 101 when the completion operation is performed in a state in which no commodity is registered may be determined by a designer of the program of the processor 101. For example, the processor 101 may neglect the completion operation. Alternatively, the processor 101 may disable the completion operation in a state in which no commodity is registered. If the completion operation is not performed, the processor 101 determines No in Act 9 and proceeds to the processing in Act 10.

In Act 10, the processor 101 determines whether or not the remaining battery level of the battery 109 is low. Specifically, the processor 101 acquires a residual quantity output from the battery gauge 110 to determine whether or not the residual quantity is equal to or less than the threshold value A. If the residual quantity is equal to or less than the threshold value A, the processor 101 determines that the remaining battery level of the battery 109 is low. If the processor 101 determines that the remaining battery level of the battery 109 is not low, the processor 101 determines No in Act 10 and returns to the processing in Act 7. Thus, the processor 101 repeats the processing in Act 7 to Act 10 until the commodity code is input, the deletion operation is performed, the completion operation is performed, or until the remaining battery level of the battery 109 is low.

Accordingly, the processor 101 cooperates with the battery gauge 110 and the battery 109 to function as a residual quantity acquisition section to acquire the remaining battery level. The processor 101 functions as the residual quantity acquisition section to acquire the remaining battery level.

If the commodity code is input in the standby state in Act 7 to Act 10, the processor 101 determines Yes in Act 7 and proceeds to the processing in Act 11.

In Act 11, the processor 101 adds the commodity code input in the standby state in Act 7 to Act 10 to the first commodity list stored in the RAM 103 or the auxiliary storage device 104. As a result, the commodity is registered in the first commodity list. The processor 101 updates contents of the registration screen to contents based on the state of the latest first commodity list. After the processing in Act 11, the processor 101 returns to the processing in Act 7.

If the operator of the registration terminal 10 wants to delete a commodity already registered in the first commodity list, the operator of the registration terminal 10 designates the commodity to be deleted and performs the deletion operation.

If the deletion operation is performed in the standby state in Act 7 to Act 10, the processor 101 determines Yes in Act 8 and proceeds to the processing in Act 12.

In Act 12, the processor 101 deletes the commodity code of the commodity designated by the operation performed by the operator of the registration terminal 10 from the first commodity list. After the processing in Act 12, the processor 101 returns to the processing in Act 7.

If the completion operation is performed in the standby state in Act 7 to Act 10, the processor 101 determines Yes in Act 9 and proceeds to the processing in Act 13.

The operator of the registration terminal 10 uses the reading device 106 to read a barcode attached to the POS terminal 30 that performs settlement.

In Act 13, the processor 101 stands by until a POS ID is input. For example, the POS ID is input as follows. The operator of the registration terminal 10 uses the reading device 106 to read the barcode in which the POS ID is recorded. The reading device 106 reads the POS ID recorded in the barcode and inputs it to the processor 101. If the POS ID is input, the processor 101 determines Yes in Act 13 and proceeds to the processing in Act 14.

In Act 14, the processor 101 transmits the first commodity list to the POS terminal 30 specified by the POS ID input in Act 13. The first commodity list is transmitted to the POS terminal 30 via the server 20 as follows.

Specifically, the processor 101 generates the transfer request. The transfer request includes the first commodity list, the POS ID input in Act 13, and the customer ID stored in the RAM 103 or the auxiliary storage device 104. The transfer request instructs the server 20 to transfer the first commodity list to the POS terminal 30 specified by the POS ID input in Act 13. After generating the transfer request, the processor 101 controls the communication interface 105 to transmit the transfer request to the server 20. Under the control of the processor 101, the communication interface 105 transmits the transfer request to the server 20. The transmitted transfer request is received by the communication interface 25 of the server 20.

In Act 15, the processor 101 resets the first commodity list. Specifically, the processor 101 sets the first commodity list to a state in which no commodity is registered. After the processing in Act 15, the processor 101 terminates the processing shown in Fig. 2 and Fig. 3.

Meanwhile, if the transfer request is received in the standby state in Act 31 to Act 37 in Fig. 4, the processor 21 of the server 20 determines Yes in Act 32 and proceeds to the processing in Act 40.

In Act 40, the processor 21 transmits the first commodity list and the customer ID included in the transfer request received in the standby state in Act 31 to Act 37 to the POS terminal 30 specified by the POS ID included in the transfer request. Specifically, the processor 21 generates a list notification including the first commodity list and the customer ID. Then, the processor 21 controls the communication interface 25 to transmit the list notification to the POS terminal 30. Under the control of the processor 21, the communication interface 25 transmits the list notification to the POS terminal 30. The transmitted list notification is received by the communication interface 35 of the POS terminal 30. After the processing in Act 40, the processor 21 returns to the processing in Act 31.

Meanwhile, the processor 31 of the POS terminal 30 starts the processing shown in Fig. 5 when the POS terminal 30 is started.

In Act 51, the processor 31 resets the second commodity list stored in the RAM 33 or the auxiliary storage device 34. Specifically, the processor 31 sets the second commodity list to a state in which no commodity is registered.

In Act 52, the processor 31 determines whether or not the commodity code is input. For example, the commodity code is input to the processor 31 as shown below. The operator of the POS terminal 30 uses the scanner 36 to read a barcode attached to a commodity. As a result, a commodity code recorded in the barcode is input to the processor 31. Alternatively, the operator of the POS terminal 30 may manually input the commodity code by touching keys displayed on the touch panel or by operating the input device 38. As a result, the commodity code is input to the processor 31. The operator of the registration terminal 10 may operate a commodity code key associated with the commodity code. The commodity code key is included, for example, in the input device 38. Alternatively, the commodity code key may be displayed on the touch panel. If the commodity code key is operated, the commodity code associated with the commodity code key is input to the processor 31. The processor 31 may specify the commodity code using image recognition. In this case, the processor 31 includes a camera as the scanner 36. Then, the processor 31 specifies a category of the commodity based on the image captured by the camera. Furthermore, the processor 31 specifies the commodity code associated with the commodity based on the specified category of the commodity. As a result, the commodity code is input to the processor 31. If the commodity code is not input, the processor 31 determines No in Act 52 and proceeds to the processing in Act 53.

In Act 53, the processor 31 determines whether or not a deletion operation for deleting a commodity registered in the second commodity list is performed. If the deletion operation is not performed, the processor 31 determines No in Act 53 and proceeds to the processing in Act 54.

In Act 54, the processor 31 determines whether or not a completion operation for completing the registration of the commodity is performed. Specifically, the processor 31 determines whether or not a predetermined operation such as touching a subtotal button of the input device 38 is performed. As an operation rule, an operation for instructing the completion of registration is performed after at least one commodity is registered. The operation of the processor 31 when the operation for instructing the completion of registration is performed in a state in which no commodity is registered may be determined by a designer of the program of the processor 31. For example, the processor 31 neglects the operation for instructing the completion of the registration. Alternatively, if no commodity is registered, the processor 31 may disable the operation for instructing the completion of the registration. If the operation for instructing the completion of the registration is not performed, the processor 31 determines No in Act 54 and proceeds to the processing in Act 55.

In Act 55, the processor 31 determines whether or not the communication interface 35 receives the list notification. If the list notification is not received, the processor 31 determines No in Act 55 and proceeds to the processing in Act 56.

In Act 56, the processor 31 determines whether or not the customer ID is input. If the customer ID is not input, the processor 31 determines No in Act 56 and returns to the processing in Act 52. Thus, the processor 31 repeats the processing in Act 52 to Act 56 until the commodity code is input, the deletion operation is performed, the completion operation is performed, the first commodity list is received, or the customer ID is input.

If the commodity code is input in the standby state in Act 52 to Act 56, the processor 31 determines Yes in Act 52 and proceeds to the processing in Act 57.

In Act 57, the processor 31 adds the commodity code input in the standby state in Act 52 to Act 56 to the second commodity list. As a result, the commodity specified by the commodity code is registered in the second commodity list. After the processing in Act 57, the processor 31 returns to the processing in Act 52.

If the operator of the POS terminal 30 wants to delete a commodity already registered in the second commodity list, the operator designates the commodity to be deleted and performs the deletion operation.

If the deletion operation is performed in the standby state in Act 52 to Act 56, the processor 31 determines Yes in Act 53 and proceeds to the processing in Act 58.

In Act 58, the processor 31 deletes the commodity code of the commodity designated by the operation of the operator of the POS terminal 30 from the second commodity list. After the processing in Act 58, the processor 31 returns to the processing in Act 52.

If the completion operation is performed in the standby state in Act 52 to Act 56, the processor 31 determines Yes in Act 54 and proceeds to the processing in Act 59.

In Act 59, the processor 31 performs a settlement processing based on the commodity code registered in the second commodity list. The customer pays for the price of the commodity. Since the settlement processing is a well-known processing, a detailed description thereof is omitted. After the processing in Act 59, the processor 31 returns to the processing in Act 51.

If the list notification is received in the standby state in Act 52 to Act 56, the processor 31 determines Yes in Act 55 and proceeds to the processing in Act 60.

In Act 60, the processor 31 updates the second commodity list. For example, the processor 31 additionally registers the commodity registered in the first commodity list included in the list notification received in the standby state in Act 52 to Act 56 to the second commodity list. Specifically, the processor 31 adds all the commodity codes included in the first commodity list to the second commodity list. Alternatively, the processor 31 may make the commodity registered in the second commodity list to be the same as the commodity registered in the first commodity list. Specifically, for example, after resetting the second commodity list, the processor 31 adds all the commodity codes included in the first commodity list to the second commodity list. Alternatively, the processor 31 may overwrite the second commodity list with the first commodity list. Whether to additionally register the commodity as described above or to make registered contents of the two commodity lists the same may be determined in advance as the update of the commodity list by a designer of the POS terminal 30, an administrator of the POS terminal 30, or the operator of the POS terminal 30 as appropriate.

Meanwhile, if the processor 101 of the registration terminal 10 determines that the remaining battery level of the battery 109 is low in the standby state in Act 7 to Act 10 in Fig. 2, the processor 101 determines Yes in Act 10 and proceeds to Act 16 in Fig. 3.

In Act 16, the processor 101 generates a start request to require the server 20 to start backing-up of the first commodity list. The start request includes a first commodity list and the customer ID stored in the RAM 103 or the auxiliary storage device 104. After generating the start request, the processor 101 controls the communication interface 105 to transmit the start request to the server 20. Under the control of the processor 101, the communication interface 105 transmits the start request to the server 20. The transmitted start request is received by the communication interface 25 of the server 20.

Therefore, by performing the processing in Act 16, the processor 101 cooperates with the communication interface 105 to function as a communication section or a first communication section to transmit the commodity information acquired by the information acquisition section to the server 20 when the remaining battery level becomes equal to or less than the threshold value A. By performing the processing in Act 16, the processor 101 functions as a communication controller that controls the communication device to transmit the commodity information acquired by the information acquisition section when the remaining battery level becomes equal to or less than the threshold value A. From the above, the threshold value A is an example of a first threshold value.

If the start request is received in the standby state in Act 31 to Act 37, the processor 21 determines Yes in Act 33 and proceeds to the processing in Act 41.

In Act 41, the processor 21 creates backup data associated with the customer ID included in the start request received in the standby state in Act 31 to Act 37. The backup data is created by backing up the first commodity list included in the start request. The backup data includes the first commodity list. The first commodity list included in the backup data is hereinafter referred to as a "third commodity list" . Hereinafter, the "first commodity list" refers to the first commodity list stored in the registration terminal 10. After the processing in Act 41, the processor 21 returns to the processing in Act 31.

Therefore, by performing the processing in Act 41, the processor 21 cooperates with the communication interface 25 to function as a second communication section.

Meanwhile, in Act 17 in Fig. 3, the processor 101 of the registration terminal 10 controls each section to notify the remaining battery level. For example, the processor 101 controls the touch panel 107 to display an image containing characters or the like indicating that the remaining battery level is low, a guidance for the customer to perform checkout at a register, that the commodity list can be delivered to another registration terminal 10, and a method for delivering the commodity list to another registration terminal 10. For example, the processor 101 may control the speaker 108 to output sound indicating these notification contents.

In Act 18, the processor 101 determines whether or not the commodity code is input. For example, the commodity code is input to the processor 101 as shown below. The operator of the registration terminal 10 uses the reading device 106 to read the barcode attached to the commodity. As a result, the commodity code recorded in the barcode is input to the processor 101. If the commodity code is not input, the processor 101 determines No in Act 18 and proceeds to the processing in Act 19.

In Act 19, the processor 101 determines whether or not a deletion operation is performed. If the deletion operation is not performed, the processor 101 determines No in Act 19 and proceeds to the processing in Act 20.

In Act 20, the processor 101 determines whether or not a completion operation is performed. If the completion operation is not performed, the processor 101 determines No in Act 20 and proceeds to the processing in Act 21.

In Act 21, the processor 101 determines whether or not the battery 109 almost runs out. Specifically, the processor 101 determines whether or not the residual quantity output from the battery gauge 110 is equal to or less than a threshold value B. If the residual quantity is equal to or less than the threshold value B, the processor 101 determines that the battery 109 almost runs out. The threshold value B is less than the threshold value A. If the battery 109 has sufficient energy, the processor 101 determines No in Act 21 and returns to the processing in Act 18. Thus, the processor 101 repeats the processing in Act 18 to Act 21 until the commodity code is input, the deletion operation is performed, the completion operation is performed, or the battery 109 almost runs out.

If the commodity code is input in the standby state in Act 18 to Act 21, the processor 101 determines Yes in Act 18 and proceeds to the processing in Act 22.

In Act 22, the processor 101 additionally stores the commodity code input in the standby state in Act 18 to Act 21 in the first commodity list. As a result, the commodity specified by the commodity code is registered in the first commodity list.

In Act 23, the processor 101 generates an addition request. The addition request includes the commodity code input in the standby state in Act 18 to Act 21 and the customer ID stored in the RAM 103 or the auxiliary storage device 104. The addition request instructs the server 20 to additionally register the commodity code in the third commodity list included in the backup data. After generating the addition request, the processor 101 controls the communication interface 105 to transmit the addition request to the server 20. Under the control of the processor 101, the communication interface 105 transmits the addition request to the server 20. The transmitted addition request is received by the communication interface 25 of the server 20. After the processing in Act 23, the processor 101 returns to the processing in Act 18.

Meanwhile, if the addition request is received in the standby state in Act 31 to Act 37 in Fig. 4, the processor 21 of the server 20 determines Yes in Act 34 and proceeds to the processing in Act 42.

In Act 42, the processor 21 stores the commodity code included in the addition request received in the standby state in Act 31 to Act 37 in the third commodity list included in the backup data associated with the customer ID included in the addition request. As a result, the commodity registered in the third commodity list is the same as the commodity registered in the first commodity list stored in the registration terminal 10 that transmits the addition request. After the processing in Act 42, the processor 21 returns to the processing in Act 31.

Meanwhile, if the deletion operation is performed in the standby state in Act 18 to Act 21 in Fig. 3, the processor 101 of the registration terminal 10 determines Yes in Act 19 and proceeds to the processing in Act 24.

In Act 24, the processor 101 deletes the commodity code of the commodity designated by the operation performed by the operator from the first commodity list, similarly to Act 12.

In Act 25, the processor 101 generates the deletion request. The deletion request includes the commodity code of the commodity designated by the operator and the customer ID stored in the RAM 103 or the auxiliary storage device 104. The deletion request instructs the server 20 to delete the commodity code from the third commodity list included in the backup data. After generating the deletion request, the processor 101 controls the communication interface 105 to transmit the deletion request to the server 20. Under the control of the processor 101, the communication interface 105 transmits the deletion request to the server 20. The transmitted deletion request is received by the communication interface 25 of the server 20. After the processing in Act 25, the processor 101 returns to the processing in Act 18.

Meanwhile, if the deletion request is received in the standby state in Act 31 to Act 37 in Fig. 4, the processor 21 of the server 20 determines Yes in Act 35 and proceeds to the processing in Act 43. In Act 43, the processor 21 deletes the commodity code included in the deletion request received in the standby state in Act 31 to Act 37 from the third commodity list included in the backup data associated with the customer ID included in the addition request. As a result, the commodity registered in the third commodity list is the same as the commodity registered in the first commodity list stored in the registration terminal 10 that transmits the addition request. After the processing in Act 43, the processor 21 returns to the processing in Act 31.

Meanwhile, if the completion operation is performed in the standby state in Act 18 to Act 21 in Fig. 3, the processor 101 of the registration terminal 10 determines Yes in Act 20 and proceeds to the processing in Act 13 in Fig. 2.

If the remaining battery level of the battery 109 becomes equal to or less than the threshold value B in the standby state in Act 18 to Act 21 in Fig. 3, the processor 101 determines Yes in Act 21 and proceeds to the processing in Act 26.

In Act 26, the processor 101 performs an operation for notifying the store clerk that the battery 109 almost runs out. Specifically, the processor 101 generates a report request, for example. The report request instructs the server 20 to enable the terminal for store clerk 40 to perform a notification operation. The report request includes, for example, at least one of the customer IDs stored in the RAM 103 or the auxiliary storage device 104 and the terminal ID stored in the ROM 102 or the auxiliary storage device 104. The report request may include location information of the registration terminal 10. After generating the report request, the processor 101 controls the communication interface 105 to transmit the report request to the terminal for store clerk 40. Under the control of the processor 101, the communication interface 105 transmits the report request to the terminal for store clerk 40. The transmitted report request is received by the communication interface 45 of the terminal for store clerk 40. The processor 101 may control an LED (Light-Emitting Diode) or the like included in the registration terminal 10 to emit light.

Therefore, by performing the processing in Act 26, the processor 101 cooperates with the communication interface 105 to function as the communication section for transmitting information indicating that the remaining battery level is low when the remaining battery level becomes equal to or less than the threshold value B. From the above, the threshold value B is an example of a third threshold value.

In Act 27, the processor 101 controls each section to notify the remaining battery level. For example, the processor 101 controls the touch panel 107 to display an image containing characters or the like indicating that the remaining battery level is about to run out, a guidance for the customer to perform checkout at a register, that the commodity list can be delivered to another registration terminal 10, and a method for delivering the commodity list to another registration terminal 10. For example, the processor 101 may control the speaker 108 to output sound indicating these notification contents. After the processing in Act 27, the processor 101 terminates the processing shown in Fig. 2 and Fig. 3.

As described above, the processor 101 does not receive input of the commodity code as Act 7 or Act 18 if "Yes" is determined in Act 21. Therefore, if the remaining battery level becomes equal to or less than the threshold value B, the processor 101 stops registering the commodity information. From the above, the threshold value B is an example of the second threshold value.

Meanwhile, if a report request is received while the Act 31 to Act 37 are in the standby state, the processor 21 of the server 20 determines Yes in Act 36 and proceeds to the processing in Act 44.

In Act 44, the processor 21 generates a report notification. The report notification instructs the terminal for store clerk 40 to perform a notification operation. The report notification includes, for example, a report request received in the standby state in Act 31 to Act 37. After generating the report notification, the processor 21 controls the communication interface 25 to transmit the report notification to the terminal for store clerk 40. Under the control of the processor 21, the communication interface 25 transmits the report notification to the terminal for store clerk 40. The transmitted report notification is received by the communication interface 45 of the terminal for store clerk 40.

Meanwhile, in Act 81 in Fig. 6, the processor 41 of the terminal for store clerk 40 stands by until the report notification is received by the communication interface 45. If the report notification is received, the processor 41 determines Yes in Act 81 and proceeds to the processing in Act 82.

In Act 82, the processor 41 controls each section to perform the notification operation. Specifically, the processor 41, for example, controls the touch panel 46 to display, on the touch panel 46, a screen indicating that the battery of the terminal specified by the customer ID or the terminal ID is about to run out. If the report notification received in Act 81 includes the position information, the position information is displayed. At this time, the processor 41 may operate a speaker, a vibrator, an LED, and the like provided in the terminal for store clerk 40.

The store clerk confirms the content of the screen displayed on the touch panel 46 and searches for the registration terminal 10 whose battery is about to run out in the retail store. Then, for example, the store clerk gives advice to a customer who is the operator of the registration terminal 10 about that the battery is about to run out and how to deal with this problem. For example, the store clerk advises the customer that he/she can deliver the first commodity list to another registration terminal 10. Alternatively, the store clerk may advise the customer to perform checkout at once before the battery runs out. The store clerk may advise the customer that he/she can deliver the first commodity list to the POS terminal 30. If the store clerk wants to stop the notification operation after finishing the guidance, the store clerk operates the terminal for store clerk 40 to stop the notification operation.

In Act 83, the processor 41 stands by until an operation to stop the notification operation is performed. If the operation to stop the notification operation is performed, the processor 41 determines Yes in Act 83 and returns to the processing in Act 81.

The store clerk hands another registration terminal 10 over to the customer using the registration terminal 10 whose battery is about to run out or has already run out. The customer receiving the registration terminal 10 handed over from the store clerk logs in using the registration terminal 10. In this case, the transmission response received in Act 4 includes the backup data.

Therefore, by performing the processing in Act 4, the processor 101 cooperates with the communication interface 105 to function as the communication section that receives the commodity information stored in the server 20 from the server 20.

If the backup data is included in the transmission response received in Act 4 in Fig. 2, the processor 101 of the registration terminal 10 determines Yes in Act 5 and proceeds to the processing in Act 28.

In Act 28, the processor 101 makes the commodity registered in the first commodity list to be the same as the commodity registered in the third commodity list included in the transmission response received in Act 4. Specifically, for example, after resetting the first commodity list, the processor 101 adds all the commodity codes included in the third commodity list to the first commodity list. Alternatively, the processor 101 may overwrite the first commodity list with the third commodity list. After the processing in Act 28, the processor 101 proceeds to the processing in Act 6.

Therefore, by performing the processing in Act 4, the processor 101 cooperates with the communication interface 105 to function as the communication section which receives the commodity information stored in the server from the server. As the commodity information is received by the communication section, the processor 101 functions as the information acquisition section for acquiring the commodity information received by the communication section.

As described above, even after the battery of the registration terminal 10 runs out, by logging in with another registration terminal 10, it is possible to deliver the commodity list from the backup data to another registration terminal 10.

The customer using the registration terminal 10 whose battery has run out may ask the operator of the POS terminal 30 to input the customer ID to the POS terminal 30. The customer may operate the POS terminal 30 to input the customer ID. If the customer ID is input in the standby state in Act 52 to Act 56 in Fig. 5, the processor 31 of the POS terminal 30 determines Yes in Act 56 and proceeds to the processing in Act 61.

In Act 61, the processor 31 generates a transmission request including the customer ID input in the standby state in Act 52 to Act 56. Then, the processor 31 controls the communication interface 35 to transmit the transmission request to the server 20. Under the control of the processor 31, the communication interface 35 transmits the transmission request to the server 20. The transmitted transmission request is received by the communication interface 25 of the server 20.

The server 20 receiving the transmission request performs the processing in Act 38 and Act 39 in Fig. 4. As a result, the transmission response is transmitted from the server 20 to the POS terminal 30.

In Act 62 in Fig. 5, the processor 31 stands by until the transmission response is received by the communication interface 35. If the transmission response is received, the processor 31 determines Yes in Act 62 and proceeds to the processing in Act 63.

In Act 63, the processor 31 determines whether or not the backup data is included in the transmission response received in Act 62. If the transmission response does not include the backup data, the processor 31 determines No in Act 63 and returns to the processing in Act 52. On the other hand, if the transmission response includes the backup data, the processor 31 determines Yes in Act 63 and proceeds to the processing in Act 64.

In Act 64, the processor 31 updates the second commodity list. For example, the processor 31 additionally registers the commodity registered in the third commodity list included in the backup data received in Act 62 in the second commodity list. Specifically, the processor 31 adds all the commodity codes included in the third commodity list to the second commodity list. Alternatively, the processor 31 may make the commodity registered in the second commodity list to be the same as the commodity registered in the third commodity list. Specifically, for example, after resetting the second commodity list, the processor 31 adds all the commodity codes included in the third commodity list to the second commodity list. Alternatively, the processor 31 may overwrite the second commodity list with the third commodity list. Whether to additionally register the commodity as described above or to make registered contents of the two commodity lists the same may be determined in advance as the update of the commodity list by a designer of the POS terminal 30, an administrator of the POS terminal 30, or the operator of the POS terminal 30 as appropriate.

After the processing in Act 60 or Act 64, the processor 31 proceeds to the processing in Act 65.

In Act 65, the processor 31 determines whether or not the commodity code is input in the same manner as in Act 52. If the commodity code is not input, the processor 31 determines No in Act 65 and proceeds to the processing in Act 66.

In Act 66, the processor 31 determines whether or not the deletion operation is performed in the same manner as in Act 53. If the deletion operation is not performed, the processor 31 determines No in Act 66 and proceeds to the processing in Act 67.

In Act 67, the processor 31 determines whether or not the completion operation is performed in the same manner as in Act 54. If the completion operation is not performed, the processor 31 determines "No" in Act 67 and returns to the processing in Act 65. Thus, the processor 31 repeats the processing in Act 65 to Act 67 until the commodity code is input, the deletion operation is performed, or the completion operation is performed.

If the commodity code is input in the standby state in Act 65 to Act 67, the processor 31 determines Yes in Act 65 and proceeds to the processing in Act 68.

In Act 68, the processor 31 adds the commodity code input in the standby state in Act 65 to Act 67 to the second commodity list. After the processing in Act 68, the processor 31 returns to the processing in Act 65.

If the deletion operation is performed in the standby state in Act 65 to Act 67, the processor 31 determines Yes in Act 66 and proceeds to the processing in Act 69.

In Act 69, the processor 31 deletes the commodity code of the commodity designated by the operation performed by the operator of the POS terminal 30 from the second commodity list. After the processing in Act 69, the processor 31 returns to the processing in Act 65.

If the completion operation is performed in the standby state in Act 65 to Act 67, the processor 31 determines Yes in Act 67 and proceeds to the processing in Act 70.

In Act 70, the processor 31 performs a settlement processing based on the commodity code registered in the second commodity list. The customer pays for the price of the commodity.

In Act 71, the processor 31 generates the completion notification. The completion notification includes the customer ID included in the list notification received in the standby state in Act 52 to Act 56. Alternatively, the completion notification includes the customer ID input in the standby state in Act 52 to Act 56. The completion notification indicates that the settlement based on the commodity list associated with the customer ID is completed. After generating the completion notification, the processor 31 controls the communication interface 35 to transmit the completion notification to the server 20. Under the control of the processor 31, the communication interface 35 transmits the completion notification to the server 20. The transmitted completion notification is received by the communication interface 25 of the server 20. After the processing in Act 71, the processor 31 returns to the processing in Act 51.

Meanwhile, if the completion notification is received in the standby state in Act 31 to Act 37, the processor 21 of the server 20 determines Yes in Act 37 and proceeds to the processing in Act 45.

In Act 45, the processor 21 confirms whether or not the backup data associated with the customer ID included in the completion notification received in the standby state in Act 31 to Act 37 is stored in the auxiliary storage device 24. Then, if the backup data associated with the customer ID is stored, the processor 21 deletes the backup data. After the processing in Act 45, the processor 21 returns to the processing in Act 31.

According to the checkout system 1 of the embodiment, if the residual quantity of the battery 109 becomes equal to or less than the threshold value A, the registration terminal 10 transmits the first commodity list to the server 20 to back up the first commodity list. Then, another registration terminal 10 or the POS terminal 30 can take over the commodity list by receiving the commodity list that has been backed up. In this way, even when the battery of the registration terminal 10 runs out, the registered contents in the commodity list is not lost.

According to the checkout system 1 of the embodiment, when the registration terminal 10 additionally registers the commodity in the first commodity list after the server 20 backs up the first commodity list, the registration terminal 10 notifies the server 20 about additional registration. If the registration terminal 10 deletes the commodity registered in the first commodity list after the server 20 backs up the first commodity list, the registration terminal 10 notifies the server 20 about the deletion. As a result, the server 20 can update the backup data with the latest information based on the notification. Therefore, even when the battery of the registration terminal 10 runs out, the registered contents in the commodity list is not lost.

According to the checkout system 1 of the embodiment, when the remaining battery level of the registration terminal 10 is not equal to or less than the threshold value A, the server 20 does not store the backup data. Therefore, as compared with the case in which the backup data is constantly stored regardless of the remaining battery level of the registration terminal 10, the cost by the server 20 and the communication can be suppressed.

According to the checkout system 1 of the embodiment, the registration terminal 10 does not receive the input of the commodity code when the remaining battery level is equal to or less than the threshold value B. As a result, the registration terminal 10 can suppress a decrease in the remaining battery level.

According to the checkout system 1 of the embodiment, when the remaining battery level becomes equal to or less than the threshold value B, the registration terminal 10 notifies the store clerk. As a result, the store clerk can promptly give guidance to the customer.

The above embodiment can also be modified as follows.

In the above embodiment, the registration terminal 10 has the threshold value A and the threshold value B. However, the registration terminal 10 may have either the threshold value A or the threshold value B. Specifically, in the case of having the threshold value A without having the threshold value B, for example, if No is determined in Act 20, the processor 101 returns to the processing in Act 18 without performing the processing in Act 21.

In the case of having the threshold value B without having the threshold value A, the processor 101 proceeds to the processing in Act 26 after the processing in Act 16, for example. In this case, the threshold value B is an example of the first threshold value, the second threshold value and the third threshold value.

The processor 101 may perform the processing in Act 26 if the residual quantity is equal to or less than the threshold value A. For example, the processor 101 performs the processing in Act 26 before and after Act 16 or Act 17. In this case, the threshold value A is an example of the first threshold value and the third threshold value.

The registration terminal 10 may have a third threshold value. For example, if the residual quantity in the standby state in Act 7 to Act 10 is equal to or less than a threshold value C, which is larger than the threshold value A, the processor 101 performs the same processing as that in Act 26, and then returns to the standby state in Act 7 to Act 10. The threshold value C is an example of the third threshold value. For example, if the residual quantity in the standby state in Act 18 to Act 21 is equal to or less than a threshold value D, which is less than the threshold value A and larger than the threshold value B, the processor 101 performs the same processing as in Act 26, and then returns to the standby state in Act 18 to Act 21. The threshold value D is an example of the third threshold value. For example, after the processing in Act 21, the processor 101 may perform the same processing as in Act 26 if the residual quantity becomes equal to or less than a threshold value E which is less than the threshold value B. The threshold value E is an example of the third threshold value.

The registration terminal 10 may start the backup after stopping registration of the commodity information. Specifically, if the processor 101 determines Yes in the processing in Act 10, for example, the processor 101 proceeds to the processes in Act 26 and Act 27 without performing the processing in Act 16 to Act 21. Then, after the processing in Act 27, the processor 101 performs the same processing as in Act 16 if the residual quantity is equal to or less than a threshold value F, which is less than the threshold value A. In this case, the threshold value A is an example of the second threshold value and the third threshold value. The threshold value F is an example of the first threshold value.

In the above embodiment, the registration terminal 10 transmits a first commodity list via the server 20 to the POS terminal 30. However, the registration terminal 10 may transmit the first commodity list to the POS terminal 30 without using the server 20.

In the above embodiment, the registration terminal 10 transmits the first commodity list to the POS terminal 30 through the network NW. However, the registration terminal 10 may transmit the first commodity list to the POS terminal 30 by other methods. For example, the registration terminal 10 may transmit the first commodity list to the POS terminal 30 by near field radio communication (NFC) or the like. For example, the registration terminal 10 stores the first commodity list in a memory card, a USB (Universal Serial Bus) memory or the like. Then, the customer removes the memory card, the USB memory, or the like from the registration terminal 10 and inserts it to the POS terminal 30. In this way, the POS terminal 30 receives the first commodity list from the memory card, the USB memory, or the like.

The registration terminal 10 may have the function of transmitting the first commodity list to another registration terminal 10. The registration terminal 10 may have the function of receiving the first commodity list from another registration terminal 10. A network NW, a near field radio communication or the like may be used to transmit the first commodity list from the registration terminal 10 to another registration terminal 10.

Further, the registration terminal 10 may have a function of delivering the first commodity list to another registration terminal 10 via the memory card, the USB memory, or the like. The registration terminal 10 may also have a function of receiving the first commodity list from another registration terminal 10 via the memory card, the USB memory or the like.

In Act 45, the processor 21 may not delete the backup data as long as it is known that the backup data has been used. In this case, the processor 21 confirms whether or not the backup data is stored after excluding the used backup data in Act 38.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A registration apparatus, comprising:
an information acquisition section configured to acquire commodity information of a commodity;
a residual quantity acquisition section configured to acquire remaining battery level; and
a communication section configured to transmit the commodity information acquired by the information acquisition section to a server when the remaining battery level reaches or is below a first threshold value.

2. The registration apparatus according to claim 1, wherein the information acquisition section stops acquiring the commodity information when the remaining battery level reaches or is below a second threshold value.

3. The registration apparatus according to claim 1 or 2, wherein
the communication section receives, from the server, the commodity information stored in the server, and
the information acquisition section acquires the commodity information received by the communication section to relate to the commodity.

4. The registration apparatus according to any of claims 1 to 3, wherein the communication section transmits information indicating that the remaining battery level is low when the remaining battery level reaches or is below a third threshold value.

5. A registration system comprising a registration apparatus and a server, wherein
the registration apparatus comprises
an information acquisition section configured to acquire commodity information of a commodity;
a residual quantity acquisition section configured to acquire remaining battery level; and
a first communication section configured to transmit the commodity information acquired by the information acquisition section to the server when the remaining battery level reaches or becomes below a first threshold value; and
the server comprises
a second communication section configured to receive the commodity information transmitted by the first communication section; and
a storage section configured to store the commodity information received by the second communication section.

6. A registration method performed by a registration apparatus including a communication device, the registration method comprising:
acquiring commodity information of a commodity;
acquiring remaining battery level; and
transmitting, with the communication device, the acquired commodity information to a server when the remaining battery level is equal to or less than a first threshold value.

7. The registration method according to claim 6, further comprising stopping acquiring the commodity information when the remaining battery level becomes equal to or less than a second threshold value.

8. The registration method according to claim 6 or 7, further comprising:
controlling the communication device to receive the commodity information stored in the server from the server, and
acquiring the commodity information received by the communication device.

9. The registration method according to any of claims 6 to 8, wherein transmitting the acquired commodity information further comprises indicating that the remaining battery level is low when the remaining battery level becomes equal to or less than a third threshold value.

10. The registration method according to claim 9, further comprising notifying a store clerk about the remaining battery level.

11. The registration method according to claim 9 or 10, wherein the third threshold value equals to the second threshold value.

12. The registration method according to any of claims 6 to 11, wherein acquiring commodity information further comprises:
inputting and registering commodity information;
deleting commodity information; and
transmitting a commodity list having one or more records of a remainder of the registered commodity information to a data server connected with the registration apparatus.

13. The registration method according to any of claims 6 to 12, further comprising:
sending a notification of the remaining battery level when the remaining battery level is equal to or less than a first threshold value; and
proceeding to further acquire commodity information of other commodity.

14. The registration method according to any of claims 6 to 13, further comprising:
checking for a backup commodity list upon receiving a transmission response; and
upon a determination that the backup commodity list exists, overwriting a current commodity list with the backup commodity list.

15. The registration method according to claim 14, further comprising displaying a registration screen.
